# EUROPÄISCHE PATENTSCHRIFT

(11) **EP 3 183 190 B1**
(45) Veröffentlichungstag und Bekanntmachung des Hinweises auf die Patenterteilung: **11.11.2020**
(21) Anmeldenummer: 15766056.4
(22) Anmeldetag: 19.08.2015
(51) Int. Cl.: B65G 1/04, B65G 1/06

(54) **LAGER- UND/ODER KOMMISSIONIERSYSTEME**
STORAGE AND/OR PICKING SYSTEMS
SYSTÈMES DE STOCKAGE ET/OU DE TRIAGE

(30) Priorität: 19.08.2014 DE 102014012254
(43) Veröffentlichungstag der Anmeldung: 28.06.2017
(60) Teilanmeldung: 20194959.1
(73) Patentinhaber: Schütz, Harald, 9020 Klagenfurt am Wörthersee (AT); Amminger, Lisa-Marie, 8075 Hart bei Graz (AT)
(72) Erfinder: Schütz, Harald, 9020 Klagenfurt am Wörthersee (AT); Amminger, Lisa-Marie, 8075 Hart bei Graz (AT)
(74) Vertreter: Vossius & Partner Patentanwälte Rechtsanwälte mbB
(86) Internationale Anmeldenummer: PCT/EP2015/069090
(87) Internationale Veröffentlichungsnummer: WO 2016/026910

(56) Entgegenhaltungen:
- EP-A1- 0 961 743
- EP-A1- 1 086 910
- WO-A1-2008/136659
- WO-A1-2015/024624
- WO-A2-2009/043474
- DE-A1- 3 207 860
- DE-A1-102011 115 076
- DE-T2- 69 617 078
- DE-U1- 9 301 506
- US-A- 6 042 321
- US-A1- 2014 086 714

## Beschreibung

### Gebiet der Erfindung

Die vorliegende Erfindung betrifft allgemein Lager- und/oder Kommissioniersysteme zur Lagerung, Kommissionierung und Sortierung von Gütern unterschiedlicher Art unabhängig von der Art der verwendeten Ladehilfsmittel (Paletten, Tablare, Halbpaletten, Behälter, Einzelgebinde, etc.).

### Stand der Technik

Es sind Lagersysteme bekannt, bei denen in Regalgassen verfahrbare Fahrzeuge zum Einsatz kommen. Neuerdings sind Regalsystem zum Einsatz gebracht worden, bei denen Regalgassen in Längs- und Querrichtung angeordnet sind und in denen lenkbare bzw. längs und quer verfahrbare sogenannte Shuttle-Fahrzeuge durch die Gassen gesteuert werden können. Ein derartiges System ist grundsätzlich in der WO 2005/118436 A1 beschrieben.

Es ist ferner ein Lagersystem bekannt, bei dem Shuttle-Fahrzeuge eingesetzt werden, die eine Steuerung aufweisen, die zwar von einer zentralen Einheit einen Auftrag empfängt, z.B. einen bestimmten Behälter aus einem Regal zu holen oder ihn abzustellen, das Shuttle-Fahrzeug wird aber autonom gesteuert. Dazu sind in der Steuerung der Shuttle-Fahrzeuge unter anderem Verkehrsregeln hinterlegt, durch die gewährleistet wird, dass die in einem derartigen Lagersystem eingesetzten Shuttle-Fahrzeuge nicht miteinander kollidieren.

Derartige Shuttle-Fahrzeuge sind nur zur Aufnahme vorbestimmter Lastaufnahmemittel ausgelegt. Shuttle-Fahrzeuge für Behälter oder Paletten verwenden üblicher Weise Lastaufnahmemittel, die nach unterschiedlichen Methoden arbeiten und das Ladegut entweder mit einer Gabel vom Regal hochheben, mit einem Teleskoparm umschließen und durch Schieben an der Ladegutrückseite auf das Shuttle-Fahrzeug bringen oder durch saugen oder eingreifen mit einem Mitnehmer in geeignete Ladegut- oder Behältergeometrien die notwendige Zugkraft aufbringen, um das Ladegut auf das Shuttle-Fahrzeug zu ziehen.

Diese Technologien haben den Nachteil, dass diese Vorrichtungen immer nur die direkt benachbarten Regalplätze auf Grund der begrenzten Reichweite dieser Aufnahmevorrichtungen bedienen können und gleichzeitig speziell bei hebenden Mechanismen oftmals ein Dreh- bzw. Kippmoment auf das Shuttle-Fahrzeug selbst ausgeübt wird, was wiederum entweder eine spezielle Führung des Shuttle-Fahrzeugs erfordert oder sehr schwere Shuttle-Fahrzeuge, die auf Grund des hohen Eigengewichtes auch bei auskragenden Lasten nicht kippen.

Die EP 0 737 630 B1 offenbart einen selbsttragenden Wagen mit teleskopischen Gabeln zur Handhabung von palettierten Lasten in Lagern. Die DE 10 2001 115 076 A1 beschreibt eine Vorrichtung zum Bewegen von Transporteinheiten von einer ersten Position zu einer zweiten Position, die wenigstens ein längliches Shuttle aufweist, welches in einem Verfahrwagen integriert ist. Die DE 32 07 860 A1 betrifft eine Fördereinrichtung für eine Lagerhausanlage, bei der ein Unterfahrwagen mindestens zwei unabhängig voneinander betätigbare Hubplattformen aufweist. Der Unterfahrwagen wird auf einem Trägerwagen transportiert, der auf Laufschienen in einem Regalsystem fährt. Die US 6,042,321 offenbart ein automatisiertes Lagersystem zum Aufnehmen, Lagern und Ausgeben von Gütern, die ohne Paletten gelagert werden. Das System hat einen Transporter (ein Shuttle), der in Schienen fährt und zwei mechanisch fest miteinander verbundene Fahrzeugteile aufweist. Der Transporter ist derart konfiguriert, dass er unter die zu transportierende Güter hineinfährt und diese dabei anhebt. Eine Hubeinrichtung ist nicht vorhanden. Ferner wird jeder Transporter separat mit Energie versorgt und gesteuert, wofür Kabel vorgesehen sind. Das oben genannte Dokument US 6,042,321 offenbart ein Lager- und/oder Kommissioniersystem zum Lagern und/oder Kommissionieren von Gütern, mit: einem Regalsystem, das Regalreihen aufweist, die durch Längsgassen voneinander beabstandet und mittels mindestens einer Quergasse miteinander verbunden sind, wobei orthogonal durch die Regalreihen Lagerkanäle vorgesehen sind, und wobei die Lagerkanäle durch Kanalprofile gebildet sind und sich von einer Längsgasse zu einer unmittelbar benachbarten Längsgasse erstrecken; und mindestens zwei Lastaufnahmefahrzeuge, wobei die Kanalprofile als Fahrspur für die Lastaufnahmefahrzeuge und gleichzeitig zum Halten von Lagergut ausgebildet sind, und wobei die Lastaufnahmefahrzeuge aufweisen: einen länglich ausgebildeten Rahmen mit einem daran angeordneten Fahrgestell und einer Antriebseinrichtung zum Verfahren des Lastaufnahmefahrzeugs in Längsrichtung; mindestens einen auf dem Rahmen angeordneten Lastaufnahmeabschnitt zur Aufnahme eines Ladehilfsmittels und/oder einer Ladung; und eine Kopplungseinrichtung zum Koppeln mehrerer Lastaufnahmefahrzeuge miteinander, wobei die Lastaufnahmefahrzeuge länglich ausgebildet und mindestens doppelt so lang wie breit sind; und mindestens einem Shuttle, wobei die mindestens zwei Lastaufnahmefahrzeuge gleichzeitig auf dem Shuttle aufnehmbar sind.

Weitere Lager- und/oder Shuttle-Systeme sind beispielsweise in WO 98/01377 A1, US 2014/0086714 A1, EP 1 086 910 A1, DE 93 01 506 U1, WO 2008/136659 A1, WO 2015/024624 A1 (Stand der Technik nach Artikel 54(3) EPÜ) und WO 2009/043474 A2 offenbart.

### Gegenstand der Erfindung

Der vorliegenden Erfindung liegt die Aufgabe zugrunde, die Probleme des Standes der Technik auszuräumen und insbesondere ein verbessertes Regalsystem sowie Lager- und/oder Kommissioniersystem zum Lagern und/oder Kommissionieren von Gütern zur Verfügung zu stellen, um einerseits eine effizientere Lagerhaltung und/oder Kommisionierung zu ermöglichen und andererseits einen Mischbetrieb von Paletten und Einzelgebinden mit und ohne zusätzlichem Ladehilfsmittel (Tablare, Behälter, usw.) in einem einzigen Lagersystem zu realisieren. Diese Aufgabe wird mit den Merkmalen von Anspruch 1 gelöst. Vorteilhafte Ausführungsformen sind in den abhängigen Ansprüchen definiert.

Ausführungsformen bzw. Aspekte, die nicht in den Schutzbereich der Ansprüche fallen, sind keine Ausführungsformen der vorliegenden Erfindung.

Das erfindungsgemäße Lager- und/oder Kommissioniersystem zum Lagern und/oder Kommissionieren von Gütern weist ein Regalsystem mit Regalreihen auf, die durch Längsgassen voneinander beabstandet und mittels mindestens einer Quergasse miteinander verbunden sind. Ferner sind mindestens ein Shuttle, das ausgebildet ist, sowohl in den Längsals auch in den Quergassen des Regalsystems zu verfahren, und mindestens zwei Lastaufnahmefahrzeuge vorgesehen, die gleichzeitig auf dem Shuttle aufnehmbar sind.

Das Regalsystem kann einfach tief oder mehrfach tief ausgebildet sein. Es ist also n-fach tief, wobei n gleich oder größer 1 und kleiner 50, vorzugsweise kleiner 15 ist.

Orthogonal durch die Regalreihen sind Lagerkanäle vorgesehen. Die Lagerkanäle sind durch Kanalprofile gebildet und erstrecken sich von einer Längsgasse zu einer unmittelbar benachbarten Längsgasse quer durch die Regalreihe. Jeder Lagerkanal hat eine Breite entsprechend der Breite eines Stellplatzes. Eine solche Stellplatzbreite wird üblicherweise durch Palettenmaße definiert und kann beispielsweise durch die kurze oder lange Seite einer Europalette festgelegt werden. Beispielsweise liegt eine Stellplatzbreite bzw. die Breite des Lagerkanals im Bereich zwischen 0,4 m und 1,5 m. Pro Stellplatzbreite sind mindestens zwei parallel verlaufende Kanalprofile für jeweils mindestens ein Lastaufnahmefahrzeug vorgesehen. Es können beispielsweise bis zu zwölf parallel verlaufende Kanalprofile für jeweils mindestens ein Lastaufnahmefahrzeug vorgesehen sein.

Die Kanalprofile sind als Fahrspur für die Lastaufnahmefahrzeuge und gleichzeitig zum Halten bzw. Abstellen des Lagerguts ausgebildet. Ferner sind die Kanalprofile derart voneinander beabstandet, dass sie in die nach unten offenen Gabelfreiräume einer Palette passen, was insbesondere für die Lagerung von Paletten vorteilhaft ist.

Das Shuttle weist bevorzugt einen Rahmen, ein Fahrgestell und ein Aufnahmebereich auf, wobei der Aufnahmebereich mindestens zwei Lastaufnahmefahrzeuge gleichzeitig aufnehmen kann.

Der Aufnahmebereich des Shuttles weist bevorzugt mehrere parallel zueinander ausgerichtete Profilschienen auf, wobei in jeder der Profilschienen mindestens ein Lastaufnahmefahrzeug aufnehmbar ist. Beispielswise sind zumindest zwei der Profilschienen derart voneinander beabstandet, dass sie in die nach unten offenen Gabelfreiräume einer Palette passen.

Im Aufnahmebereich des Shuttles kann mindestens eine Einrichtung zum Fördern von Ladehilfsmitteln und/oder Ladung vorgesehen sein. Insbesondere kann dies in Form von Rad-, Rollen-, Riemen- und/oder Kettenförderern realisiert werden.

Die Lastaufnahmefahrzeuge des erfindungsgemäßen Lager- und/oder Kommissioniersystems sind zum Verfahren in dem Regalsystem ausgebildet. Die Lastaufnahmefahrzeuge sind zum (vorzugsweise autonomen) Verfahren in dem Regalsystem ausgebildet. Das Lastaufnahmefahrzeug weist einen länglich ausgebildeten Rahmen mit einem daran angeordneten Fahrgestell und einer Antriebseinrichtung zum Verfahren des Lastaufnahmefahrzeugs in Längsrichtung, mindestens einen auf dem Rahmen angeordneten Lastaufnahmeabschnitt zur Aufnahme eines Ladehilfsmittels und/oder einer Ladung, und mindestens eine Hubeinrichtung zum Anheben und Absenken des Lastaufnahmeabschnitts auf. Das Lastaufnahmefahrzeug ist länglich ausgebildet und mindestens doppelt so lang wie breit.

Bevorzugt sind mindestens zwei auf dem Rahmen angeordnete Lastaufnahmeabschnitte vorgesehen, die unabhängig voneinander mit jeweiligen Hubeinrichtungen anhebbar und absenkbar sind.

Es ist eine Kopplungseinrichtung zum Koppeln mehrerer Lastaufnahmefahrzeuge miteinander vorgesehen, wobei die Kopplung kommunikativ, nicht mechanisch erfolgt. Dabei ist ein Lastaufnahmefahrzeug als Master und das/die andere(n) Lastaufhahmefahrzeug(e) als Slave definiert. Es kann allerdings jedes Lastaufnahmefahrzeug vorzugsweise als Master oder Slave verwendet werden.

Die Kopplungseinrichtung ist dabei vorzugsweise eingerichtet (i) mindestens zwei längs zueinander ausgerichtete Lastaufnahmefahrzeuge miteinander zu koppeln, oder (ii) mindestens zwei in Querrichtung relative zueinander ausgerichtete Lastaufnahmefahrzeuge miteinander zu koppeln, oder (iii) mindestens zwei in Längsrichtung relative zueinander ausgerichtete Lastaufnahmefahrzeuge und mindestens zwei in Querrichtung relative zueinander ausgerichtete Lastaufnahmefahrzeuge miteinander zu koppeln.

Die Antriebseinrichtung kann verschiedene Komponenten aufweisen, wie z.B. (i) Räder, Rollen, Riemen und/oder Ketten, mit denen das Lastaufnahmefahrzeug verfahrbar ist, oder (ii) mindestens einen Motor, optional mit Getriebe, oder (iii) eine Steuerung zum autonomen Verfahren des Lastaufnahmefahrzeugs, oder (iv) einen Energiespeicher, vorzugsweise in Form eines Akkus, Kondensators, insbesondere Superkondensators, oder (v) jegliche Kombination aus (i) bis (iv).

Das Lastaufnahmefahrzeug kann beispielsweise auch eine Einrichtung zum Fördern des Ladehilfsmittels und/oder der Ladung in Längsrichtung, insbesondere einen oder mehrere Rad-, Rollen-, Riemen- und/oder Kettenförderer, aufweisen. Die Einrichtung zum Fördern kann z.B. am Rahmen, Fahrgestell oder Lastaufnahmeabschnitt des Lastaufnahmefahrzeugs vorgesehen sein. Besonders vorteilhaft ist die Einrichtung zum Fördern durch die Antriebseinrichtung, vorzugsweise die Räder, Rollen, Riemen und/oder Ketten, bereitgestellt, indem sie über den Lastaufnahmeabschnitt oder das sonst höchste Bauteil hinaus mit dem Ladehilfsmittel und/oder der Ladung direkt in Kontakt bringbar ist.

Bei eingefahrener Hubeinrichtung beträgt die Höhe des Lastaufnahmefahrzeugs maximal 150 mm, vorzugsweise maximal 100 mm.

Das erfindungsgemäße Lager- und/oder Kommissioniersystem führt zu einem gegenüber dem Stand der Technik wesentlich verbesserten und effizienteren Lager- und Kommissioniersystem, das insbesondere wesentlich flexibler und damit wirtschaftlicher betrieben werden kann.

Die Erfindung betrifft somit ein Lager- und Kommissioniersystem zur Lagerung, Kommissionierung und Sortierung von Gütern unterschiedlicher Art mit lenkbaren oder sonst längs und quer verfahrbaren Shuttle-Fahrzeugen mit einem oder mehreren Lastaufnahmefahrzeugen, die ein Lagersystem, das für n-fach tiefe Lagerung vorgesehen ist, derart bedienen, dass das Shuttle das oder die Lastaufnahmefahrzeuge an eine beliebige Stelle in einem aus beliebig vielen Längs- und Quergassen aufgebautem Lagersystem bringt. Das oder die Lastaufnahmefahrzeug(e) fahren dann, ohne physikalische Verbindung zum Shuttle-Fahrzeug n-fach tief in einen Lagerkanal. Dort hebt das Lastaufnahmefahrzeug bzw. heben die im Schwarm zusammenarbeitenden Lastaufnahmefahrzeuge das Lagergut an und verbringt/verbringen es anschließend entweder auf dasselbe oder ein anderes Shuttle-Fahrzeug. Das System kann dabei in nur einer oder mehreren Ebenen ausgeführt sein. Bei Ausführung in mehreren Ebenen werden die Güter entweder von einem oder mehreren Lastaufnahmefahrzeugen oder vom Shuttle zu mindestens einem Hublift transportiert, der nur das Ladegut oder das Ladegut mit Lastaufnahmefahrzeug oder das Ladegut mit Lastaufnahmefahrzeug und Shuttle auf eine andere Ebene verbringt, in der weitere Aktionen (z.B. Abtransport über eine Förderstrecke zur Kommissionierung) für das Ladegut vorgesehen sind.

Damit ist die Erfindung eine Kombination von zwei oder mehr Fahrzeugen, nämlich mindestens einem Shuttle und mindestens zwei Lastaufnahmefahrzeugen, die symbiotisch in einem Regal zusammenarbeiten und dabei in beliebiger Regaltiefe agieren können und somit die Nachteile herkömmlicher Konstruktionen nicht mehr aufweisen und dadurch neue logistische Möglichkeiten eröffnen.

Eine besonders vorteilhafte Arbeitsweise ergibt sich bei der Kombination eines oder mehrerer Shuttle mit jeweils mehreren Lastaufnahmefahrzeugen, weil die Aufnahme der Fördergüter aus mehreren verschiedenen Regalkanälen zeitgleich zum Verfahren des/der Shuttle erfolgen kann. Durch das Parallelisieren des Aufnahmevorgangs in den Regalkanälen und die Fahrt des/der Shuttle in Längs- und/oder Quergängen des Regalsystems wird die Zusammenstellungszeit eines Kommissionierauftrags bestehend aus mehreren Einzelgebinden (z.B. Behältern oder Kartons) und/oder Palletten gegenüber der einzelnen Verbringung aller zu einem Auftrag gehörenden Güter deutlich verkürzt. Dadurch entsteht zusätzlich eine besonders effiziente Art der Auftragszusammenstellung und des Auftragstransportes.

Bevorzugte Ausführungsformen der Erfindung werden nachfolgend unter Bezugnahme auf die Figuren beispielhaft beschrieben. Es zeigen:
- Fig. 1: eine perspektivische Ansicht auf eine Ebene eines erfindungsgemäßen Lagersystems zur Lagerung von Paletten verschiedener Arten;
- Fig. 2: einen Ausschnitt des Lagersystems gemäß Figur 1;
- Fig. 3: eine Ausführungsform eines Shuttle-Fahrzeugs zur Verwendung im Lagersystem von Figur 1;
- Fig. 4: eine Ausführungsform eines Lastaufnahmefahrzeugs zur Verwendung im Lagersystem gemäß Figur 1 und auf einem Shuttle gemäß Figur 3;
- Fig. 5: eine perspektivische Ansicht einer alternativen Ausführungsform eines erfindungsgemäßen Lagersystems zur Lagerung von Gebinden unterschiedlicher Größe ohne Paletten;
- Fig. 6: einen Ausschnitt des Lagersystems gemäß Figur 5;
- Fig. 7: eine Ausführungsform eines Shuttle-Fahrzeugs zur Verwendung im Lagersystem gemäß Figur 5 mit darin angeordneten Lastaufnahmefahrzeugen;
- Fig. 8: eine perspektivische Ansicht eines Lastaufnahmefahrzeugs zur Verwendung in Kombination mit dem Lagersystem gemäß Figur 5 und einem Shuttle gemäß Figur 7;
- Fig. 9: eine perspektivische Ansicht der Verwendung von mehreren Lastaufnahmefahrzeugen im Verband;
- Fig. 10: eine schematische Draufsicht zur Darstellung verschiedener Komponenten eines Lastaufnahme fahrzeugs;
- Fig. 11: eine Draufsicht zur Darstellung eines mehrfach tiefen Lagersystems gemäß einer Ausführungsform der Erfindung;
- Fig. 12: eine Draufsicht auf ein erfindungsgemäßes Lagersystem zur Darstellung der Vielfalt an Optionen der Handhabungsmöglichkeiten mit einem erfindungsgemäßen Lagersystem;
- Fig. 13: eine Darstellung ähnlich Figur 12, wobei weniger Kanalprofile und Lastaufnahmefahrzeuge zum Einsatz kommen;
- Fig. 14: eine Draufsicht auf ein erfindungsgemäßes Lagersystem zur Lagerung von Paletten unterschiedlicher Arten; und
- Fig. 15a-c: ein Lastaufnahmefahrzeug, das gleichzeitig als Fördermittel verwendbar ist.

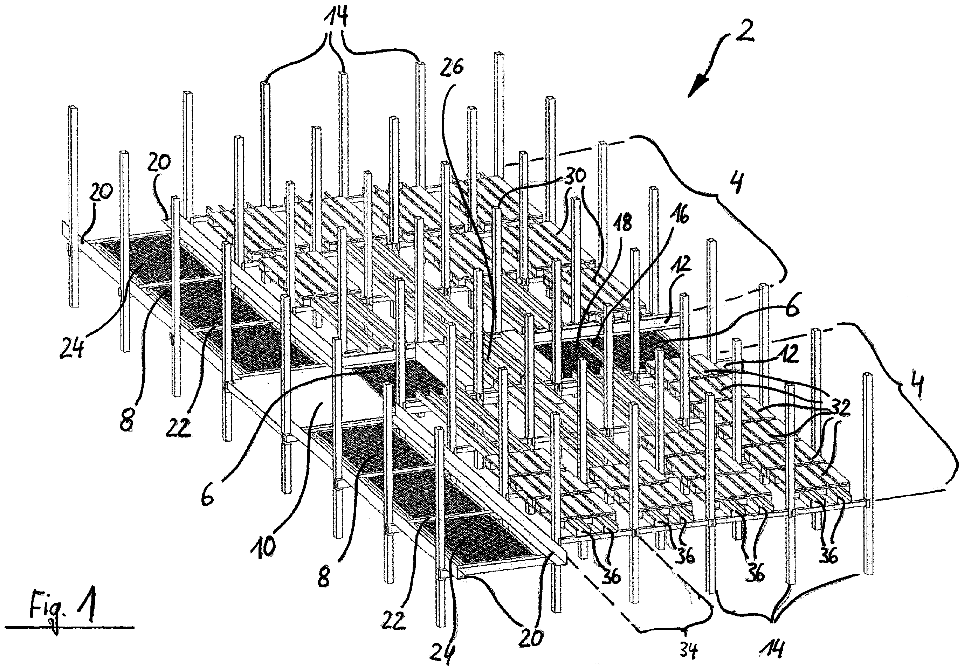

Die Erfindung wird im Anschluss unter Verweis auf die Figuren beispielhaft beschrieben. In Figur 1 ist eine perspektivische Ansicht eines erfindungsgemäßen Lagersystems 2 gezeigt, wobei der Einfachheit halber zur besseren Übersichtlichkeit lediglich eine Lagerebene dargestellt ist. Typischerweise weist das erfindungsgemäße Lagersystem 2 jedoch mehrere, vorzugsweise mindestens fünf Lagerebenen auf, die im Wesentlichen ähnlich zu der dargestellten Lagerebene aufgebaut sind. Die einzelnen Ebenen können sich jedoch hinsichtlich der Art der zu lagernden Gegenstände und damit der speziellen Anordnung der Einrichtungen zum Entnehmen der gelagerten Güter unterscheiden. Verschiedene diesbezügliche Ausführungsformen werden nachfolgend noch im Detail beschrieben.

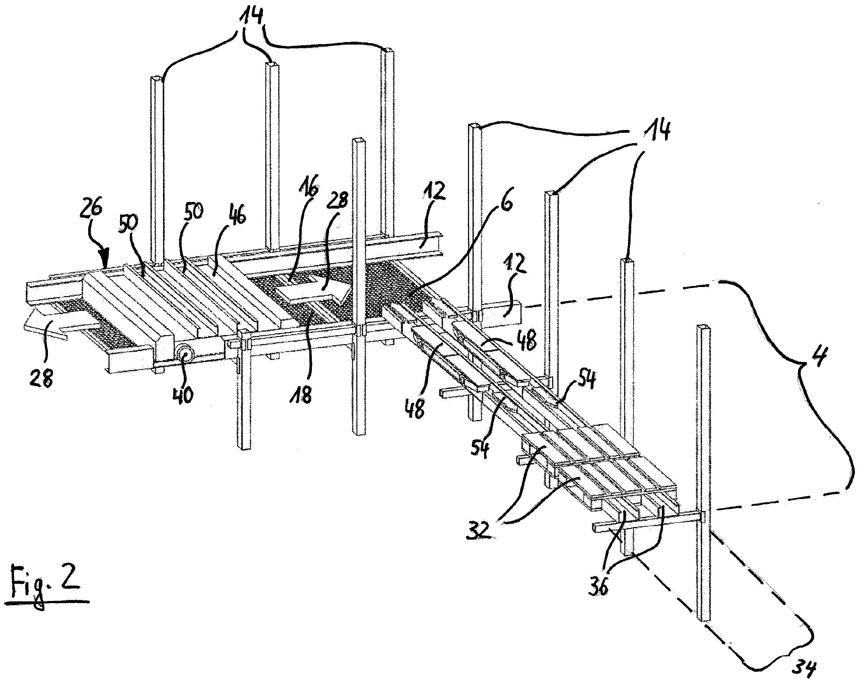

Das in Figur 1 gezeigte Lagersystem weist ein Regalsystem auf, das in verschiedenen Regalreihen 4 gebildet ist. Die Regalreihen 4 sind jeweils durch dazwischen liegende Längsgassen 6 voneinander beabstandet. Die Längsgassen 6 sind wiederum durch mindestens eine Quergasse 8 miteinander verbunden. Die Längs- und Quergassen 6, 8 treffen in einem Kreuzungsbereich 10 aufeinander. Entlang der Längsgassen 6 sind an den gegenüberliegenden Regalreihen jeweilige Schienenprofile 12 vorgesehen. Die Schienenprofile 12 sind vorzugsweise an Regalstehern 14 im Bereich der Längsgänge 6 montiert. Zwischen gegenüberliegenden Regalstehern 14 sind vorzugsweise Quertraversen 16 (Figur 2) vorgesehen, auf denen die Schienenprofile 12 abgestützt sein können. Darüber hinaus können im Bereich der Längsgassen 6 beispielsweise Gitterroste 18 zur Verwendung als Wartungssteg vorgesehen sein.

In ähnlicher Weise können in den Quergängen 8 Schienenprofile 20 an den Regalstehern 14 angeordnet sein. Auch hier sind vorzugsweise Quertraversen 22 zur Auflage der Schienenprofile 20 sowie Gitterroste 24 vorgesehen.

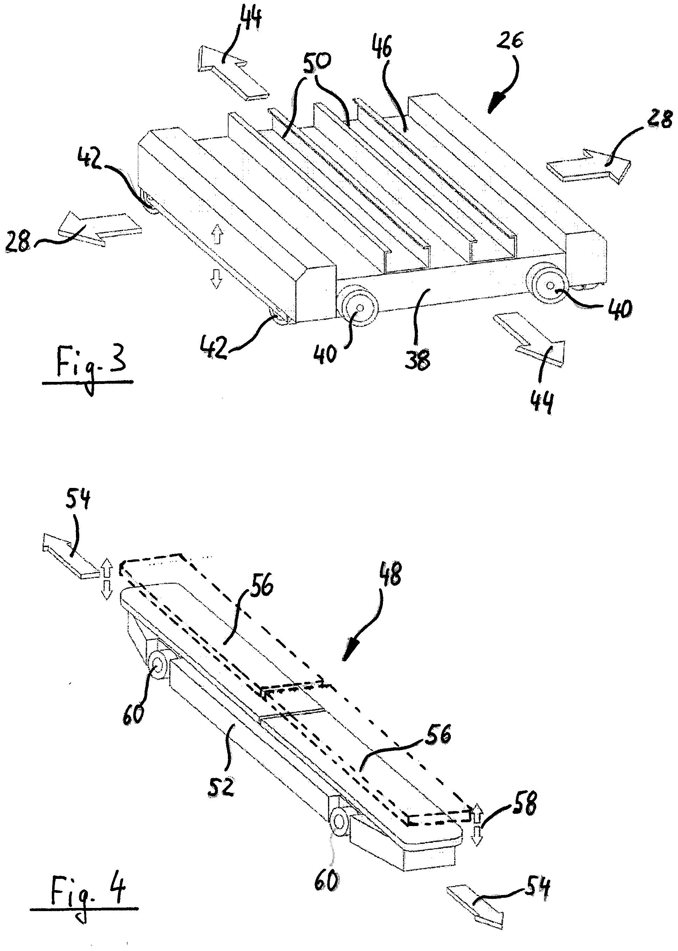

Die Schienenprofile 12 und 20 der Längs- bzw. Quergassen 6, 8 dienen als Fahrschienen für Shuttle-Fahrzeuge 26. In Figuren 1 und 2 ist ein einziges Shuttle-Fahrzeug ("Shuttle") 26 dargestellt, obwohl im erfindungsgemäßen Lagersystem eine Vielzahl von Shuttle-Fahrzeugen 26 gleichzeitig vorgesehen sein kann. Das Shuttle-Fahrzeug 26 wird nachfolgend unter Bezugnahme auf Figur 3 näher erläutert. Wie jedoch in den Figuren 1 und 2 bereits zu erkennen, ist das Shuttle 26 zur Fahrt sowohl in Längs- als auch in Quergängen 6, 8 ausgebildet. In den Figuren 1 und 2 ist das Shuttle 26 in der Längsgasse 6 dargestellt und, wie durch die Pfeile 28 symbolisch gezeigt, zur Bewegung entlang des Längsgasse 6 ausgebildet. Dazu benutzt das Shuttle 26 die Schienenprofile 12 als Fahrschienen für die Längsfahrt. Zum Übergang von einer Längsfahrt in eine Querfahrt wird das Shuttle 26 zu einem Kreuzungsbereich 10 bewegt, von wo aus es entlang der Schienenprofile 20 in Querrichtung entlang der Quergasse 8 verfahrbar ist.

Zum Übergang eines Shuttles 26 von einer Regalebene in eine andere Ebene kann mindesten eine Hubeinrichtung, zum Beispiel in Form eines Lifts, vorgesehen sein. Alternativ können die Shuttle 26 auch derart ausgebildet sein, dass sie sich selbst zwischen verschiedenen Ebenen bewegen können.

Wie in Figuren 1 und 2 dargestellt, können die Regalreihen 4 mehrfach tief ausgebildet sein. In dem dargestellten Ausführungsbeispiel sind die Regalreihen 4 jeweils 3-fach tief ausgebildet, d.h. zur Lagerung von drei Euro-Paletten 30 längs hintereinander oder von sechs "Düsseldorfer" Paletten 32 quer hintereinander dimensioniert. Das erfindungsgemäße Lagersystem 2 kann jedoch auch in beliebigen anderen Tiefen ausgebildet sein, insbesondere auch 1-fach tief oder bis zu 15-fach oder sogar 50-fach tief.

Das Regalsystem 2 weist orthogonal durch die Regalreihen 4 Lagerkanäle 34 auf, von denen in Figur 1 vier nebeneinander dargestellt sind, und in Figur 2 der besseren Übersichtlichkeit lediglich einer. Die Regalkanäle 34 erstrecken sich von einer Längsgasse 6 zur nächsten, benachbarten Längsgasse 6 und überbrücken dadurch den n-fach tiefen Lagerraum der einzelnen Regalreihen 4. In den Lagerkanälen 34 sind in der in Figuren 1 und 2 dargestellten Ausführungsform jeweils zwei Kanalprofile 36 angeordnet, die sich entlang der gesamten Länge der einzelnen Lagerkanäle 34 erstrecken. Vorzugsweise werden diese Kanalprofile 36 direkt zur Aufnahme der Güter verwendet, wie dies in den Figuren 1 und 2 dargestellt ist. Dabei sind die Kanalprofile 36 derart voneinander beabstandet, dass sie in die nach unten offenen Gabelfreiräume von Paletten, insbesondere Euro-Paletten 30 oder Düsseldorfer Paletten 32 passen. Dadurch lässt sich erheblich Lagerhöhe einsparen, da der gesamte Palettenunterbau nicht auf den lasttragenden Kanalprofilen 36 steht, sondern neben und zwischen den Kanalprofilen 36 angeordnet ist.

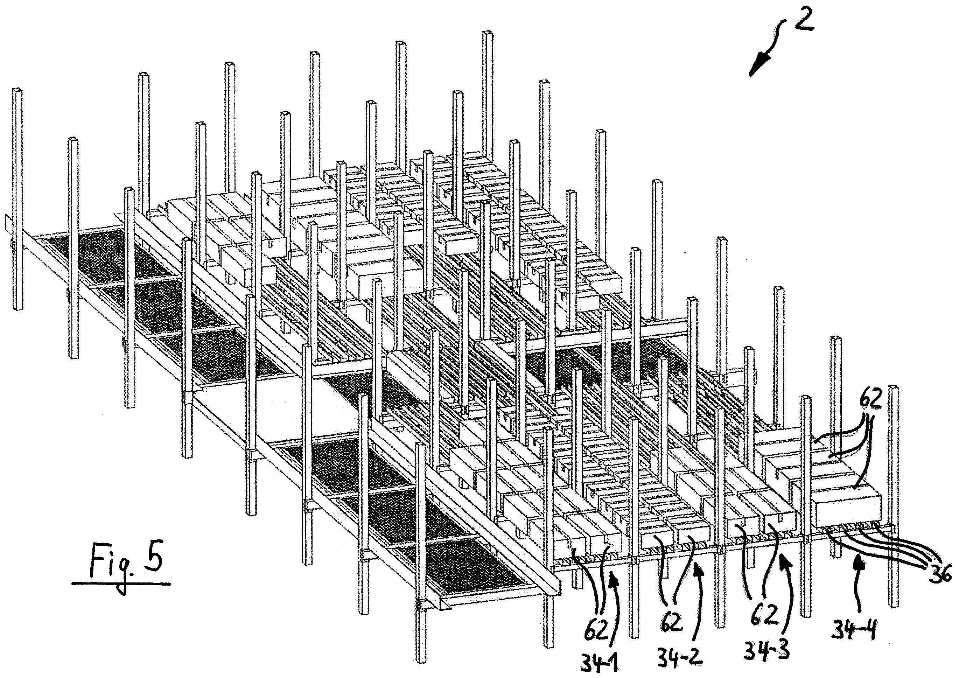

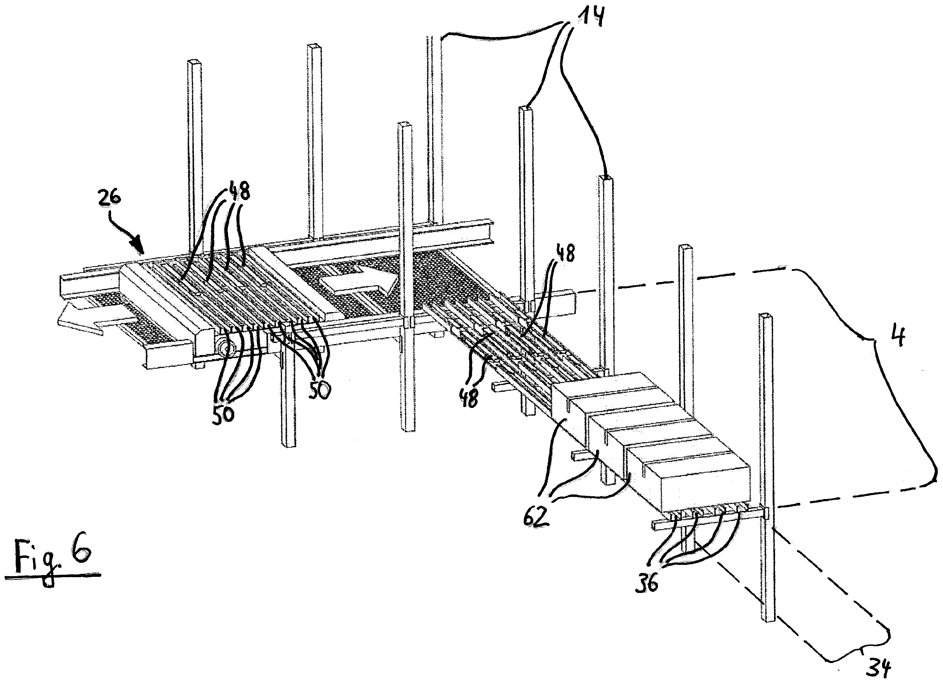

Ein Lagerkanal 34 entspricht üblicherweise einer Stellplatzbreite, die insbesondere zwischen 0,4 m und 1,5 m Breite liegt. Pro Stellplatzbreite, d.h. pro 0,4 m bis 1,5 m Breite, sind mindestens zwei parallel verlaufende Kanalprofile 36 angeordnet, wie dies in der Ausführungsform gemäß den Figuren 1 und 2 dargestellt ist. Alternativ dazu können auch mehr als zwei, insbesondere drei, vier, fünf, 6, 7, 8, 9, 10, 11 oder 12 parallel verlaufende Kanalprofile 36 je Stellplatzbreite (pro 0,4 m bis 1,5 m) vorgesehen sein, wie nachfolgend insbesondere anhand der Figuren 5, 6, 12 und 13 näher beschrieben wird.

Das im Lagersystem 2 ebenfalls vorgesehene mindestens eine Shuttle 26 ist so ausgebildet, dass es sowohl in Längs- als auch in Quergassen 6, 8 des Regalsystems 2 verfahren kann. Hierzu weist das Shuttle 26 gemäß der Darstellung in Figur 3 einen Rahmen 38 mit einem Fahrgestell und daran angebrachten Rädern 40 zur Längsfahrt entlang der Pfeile 28 in Längsgassen 6 und Rädern 42 zur Querfahrt entlang von Pfeilen 44 in Quergassen 8 auf. Die Räder 42 können beispielsweise höhenverstellbar ausgebildet sein, so dass bei eingezogenen Rädern 42 das Shuttle 26 auf den Rädern 40 in Längsrichtung entlang der Pfeile 28 in Längsgassen 6 verfahrbar ist. Bei ausgefahrenen Rädern 42 sind die Räder 40 vom Untergrund abgehoben, so dass das Shuttle 26 in Querrichtung entlang der Pfeile 44 entlang von Quergassen 8 bewegt werden kann. Andere Mechanismen zum Umstellen von Längs- auf Querfahrt des Shuttles 26 sind ebenfalls möglich, beispielsweise schwenk- bzw. drehbare Räder.

Das Shuttle 26 verfügt ferner über einen Aufnahmebereich 46, der zur Aufnahme von mindestens zwei Lastaufnahmefahrzeugen 48 (Figur 2 und 4) gleichzeitig ausgebildet ist. Hierzu hat das Shuttle 26 am Aufnahmebereich 46 vorzugsweise eine Anordnung von Kanalprofilen 50, die in ihrem Abstand der Anordnung der Kanalprofile 36 der Lagerkanäle 34 entsprichen. Dadurch kann bei entsprechender Ausrichtung des Shuttles 26 relativ zu einem Lagerkanal 34 durch die Kanalprofile 50 auf den Shuttle 26 eine Fortführung der Kanalprofile 36 des jeweiligen Lagerkanals 34 realisiert werden. In der dargestellten Ausführungsform gemäß Figur 3 sind wiederum zwei Kanalprofile 50 auf dem Aufnahmebereich 46 des Shuttles 26 vorgesehen. Es können jedoch auch mehr Kanalprofile 50 auf dem Aufnahmebereich 26 angeordnet sein, vorteilhafterweise in Übereinstimmung mit der Anzahl der Kanalprofile 36 der jeweiligen Lagerkanäle. Alternativ dazu können auch unterschiedliche Anzahlen von Kanalprofilen 50 bezüglich der Kanalprofile 36 vorgesehen sein.

Die Kanalprofile 50 sind als Profilschienen ausgebildet und können entsprechen der dargestellten Ausführungsform im Wesentlichen U-förmig geformt sein. Auf dem Aufnahmebereich 46 des Shuttles 26 kann ferner mindestens eine Einrichtung zum Fördern von Ladehilfsmittel und/oder Ladung, beispielsweise in Form von Rad-, Rollen-, Riemen- und/oder Kettenförderern (nicht dargestellt) vorgesehen sein. Damit kann auf vorteilhafte Weise Ladegut auf dem Shuttle 26 verschoben werden und/oder auf das Shuttle 26 verladen werden, ohne dass ein oder mehrere Lastaufnahmefahrzeuge 48 auf dem Shuttle 26 vorhanden sind.

Das Lastaufnahmefahrzeug 48, von dem pro Shuttle mindestens zwei auf dem Aufnahmebereich 26 angeordnet werden können, ist in Figur 4 näher gezeigt. Entsprechend der Darstellung in Figur 4 ist das Lastaufnahmefahrzeug 48 nach Art eines Skateboards ausgebildet und weist eine Länge auf, die mindestens doppelt so groß ist wie seine Breite. Entsprechend einer bevorzugten Ausführungsform ist das Lastaufnahmefahrzeug 48 beispielsweise zwischen 500 und 1300 mm lang, insbesondere zwischen 600 und 700 mm und besonders bevorzugt etwa 640 mm lang und etwa 70-180 mm, vorzugsweise 75-85 mm und insbesondere etwa 80 mm breit. Die Höhe des Lastaufnahmefahrzeugs 48 beträgt maximal 150 mm, bevorzugt maximal 100 mm, vorzugsweise maximal 80 mm oder sogar maximal 60 mm. Die Abmessungen des Lastaufnahmefahrzeugs 48 gemäß der Ausführungsformen der Figuren 1 bis 4 soll so bemessen sein, dass es insbesondere zur Verwendung mit Euro-Paletten 30 und/oder Düsseldorfer Paletten 32 geeignet ist.

Das in Figur 4 gezeigte Lastaufnahmefahrzeug 48 verfügt über einen länglich ausgebildeten Rahmen 52 mit einem daran angeordneten Fahrgestell und einer Antriebseinrichtung zum Verfahren des Lastaufnahmefahrzeugs 48 in Längsrichtung entlang der Pfeile 54 in den Kanalprofilen 36 des Regalsystems 2 bzw. den Kanalprofilen 50 des Shuttles 26. Auf dem Rahmen 52 ist mindestens ein Lastaufnahmeabschnitt 56 zur Aufnahme eines Ladehilfsmittels, z.B. einer Palette 30, 32, und/oder einer Ladung vorgesehen. In der in Figur 4 gezeigten Ausführungsform sind zwei auf dem Rahmen 52 angeordnete Lastaufnahmeabschnitte 56 vorgesehen, die unabhängig voneinander mit einer jeweiligen Hubeinrichtung anhebbar und absenkbar sind (Pfeile 58). Grundsätzlich kann das Lastaufnahmefahrzeug 48 jedoch auch nur einen oder mehr als zwei derartige Lastaufnahmeabschnitte 56 aufweisen. Vorzugsweise hat jeder dieser Lastaufnahmeabschnitte 56 eine ihm zugeordnete Hubeinrichtung zum Anheben und Absenken des jeweiligen Lastaufnahmeabschnitts 56.

Das Lastaufnahmefahrzeug 48 weist ferner eine Kopplungseinrichtung (nicht dargestellt) zum Koppeln mehrerer Lastaufnahmefahrzeuge 48 miteinander auf. Dabei ist die Kopplung rein kommunikativ, also nicht mechanisch, wobei ein Lastaufnahmefahrzeug 48 als Master fungiert und die damit gekoppelten anderen Lastaufnahmefahrzeuge 48 als Slave agieren. Vorzugsweise ist jedoch jedes Lastaufnahmefahrzeug 48 geeignet, sowohl als Master als auch als Slave definiert zu werden. Die Kopplungseinrichtung ist vorzugsweise derart konfiguriert, dass mindestens zwei längs zueinander ausgerichtete und vorzugsweise direkt hintereinander angeordnete Lastaufnahmefahrzeuge miteinander gekoppelt werden. Alternativ dazu oder zusätzlich dazu können mindestens zwei in Querrichtung relativ zueinander ausgerichtete und vorzugsweise in direkt benachbarten Kanalprofilen angeordnete Lastaufnahmefahrzeuge miteinander gekoppelt werden. In Figur 2 sind beispielsweise zwei in Querrichtung relativ zueinander ausgerichtete Lastaufnahmefahrzeuge 48 miteinander gekoppelt. Diese können zur Aufnahme einer der beiden dargestellten Düsseldorfer Paletten 32 oder beider Düsseldorfer Paletten 32 gemeinsam miteinander entlang der Pfeile 54 unter die Paletten 32 gefahren werden, um diese aufzunehmen.

Das Lastaufnahmefahrzeug 48 verfügt ferner vorzugsweise über Räder 60, die über einen Motor, optional mit Getriebe, angetrieben werden. Anstelle der Räder 60 können auch Rollen, Riemen und/oder Ketten als Antriebselemente eingesetzt werden. Ferner ist eine Steuerung vorgesehen, die vorzugsweise ein autonomes Verfahren des Lastaufnahmefahrzeugs 48 ermöglicht.

Unter dem Begriff "autonom" ist im Sinne der vorliegenden Erfindung ein komplett selbstständiges Verfahren der Lastaufnahmefahrzeuge 48 und/oder der Shuttle 26 zu verstehen, wobei keinerlei Eingriff von außen notwendig ist, um sie durch das Regalsystem 2 zu navigieren. Dazu verfügen die Lastaufnahmefahrzeuge und/oder Shuttle vorzugsweise über eine intelligente Steuerung, die beispielsweise "Verkehrsregeln" im Lagersystem 2 befolgen kann und eine entsprechende Sensorik, mit der der Verkehr insbesondere beim Übergang von einer Gasse in eine andere beobachtet und erfasst werden kann.

Die Lastaufnahmefahrzeuge 48 und/oder Shuttle 26 werden vorzugsweise kabellos betrieben und verfügen über einen Energiespeicher, beispielsweise in Form eines Akkus, Kondensators, insbesondere Superkondensators, oder Kombination daraus. Entlang des Regalsystems sind vorzugsweise verschiedene Ladestellen vorgesehen, an denen die Fahrzeuge den Kondensator und/oder Akku während der Fahrt oder bei Stillstand laden können.

Das Lastaufnahmefahrzeug 48 kann ferner eine Einrichtung zum Fördern des Ladehilfsmittels und/oder der Ladung in Längsrichtung aufweisen, wobei diese Einrichtung beispielsweise einen oder mehrere Rad-, Rollen-, Riemen- und/oder Kettenförderer aufweisen kann.

Mehrere der Lastaufnahmefahrzeuge 48 können in einer Basisstation (nicht gezeigt) angeordnet werden, die stationär oder mobil im Regalsystem vorgesehen sein kann. Die Basisstation kann beispielsweise analog zum Aufnahmebereich 26 des Shuttle 26 ausgebildet sein, um mehrere Lastaufnahmefahrzeuge 48 aufzunehmen. In einer mobilen Ausgestaltung der Basisstation ist sie zur Anbringung an einem beliebigen Regalfahrzeug, z.B. einem Regalbediengerät, ausgebildet, so dass damit mehrere Lastaufnahmefahrzeuge 48 verfahren werden können. Die Basisstation kann derart beschaffen sein, dass die Lastaufnahmefahrzeuge 48 darin beispielsweise aufgeladen und/oder Daten übermittelt werden.

Zum Betrieb des Lagersystems der vorliegenden Erfindung, insbesondere zum Ein- oder Auslagern von Gütern fährt das Shuttle 26 entsprechend einem Auftrag an die vorgesehene Lagerstelle in einem Längsgang 6 und richtet sich mit den entsprechenden Kanalprofilen 36 eines Lagergangs 34 aus. Im Anschluss daran fahren beispielsweise zwei oder vier Lastaufnahmefahrzeuge, die vorzugsweise durch die Koppeleinrichtung miteinander zu einem Verbund oder Schwarm gekoppelt sind, in die Kanalprofile 36 eines Lagerkanals 34. Dabei können sie unter darin gelagerten Gütern hindurch fahren, bis sie die gewünschte Lagerposition erreicht haben. Zur Aufnahme von Lagergut, hier Euro-Paletten 30 oder Düsseldorfer Paletten 32, werden die Lastaufnahmefahrzeuge 48 unter der jeweiligen Palette oder unter den jeweiligen Paletten positioniert und mithilfe der Hubeinrichtung wird die jeweilige Palette oder werden die jeweiligen Paletten von den Kanalprofilen 36 angehoben. Danach können die Paletten entlang der Kanalprofile 36 auf den Lastaufnahmefahrzeugen 48 entlang des Lagerkanals 34 befördert werden. Hierzu kann der Rückweg zum Shuttle 26 angetreten werden oder die Lastaufnahmefahrzeuge 48 fahren in die benachbarte bzw. gegenüberliegende Längsgasse 6 und fahren dort auf ein Shuttle 26, das wiederum korrekt ausgerichtet mit den Kanalprofilen 36 positioniert ist. Danach kann die Ladung mit dem Shuttle 26 weiter transportiert werden.

Mit dem erfindungsgemäßen Lagersystem ist es darüber hinaus möglich, dass auf jedem Shuttle 26 beispielsweise vier Lastaufnahmefahrzeuge 48 vorgesehen sind, die in unterschiedliche Lagerkanäle 34 jeweils in quer zueinander ausgerichteten Zweierpaaren geschickt werden, um Düsseldorfer Paletten 32 aus verschiedenen Lagerkanälen 34 zum Längsgang 6 zu transportieren. Dasselbe oder ein anderes Shuttle 26 kann dann die beiden aus unterschiedlichen Lagerkanälen 34 bereitgestellten Düsseldorfer Paletten 32 aufnehmen.

Es ist auch ein Betrieb möglich, bei dem Lastaufnahmefahrzeuge 48 in den Lagerkanälen 34 zumindest vorübergehend verbleiben. Dazu können sie z.B. nachdem sie die Ladung auf das Shuttle 26 transportiert haben zurück in die Lagerkanäle fahren, um weitere Güter für einen nachfolgenden Transport durch ein Shuttle 26 bereitzustellen.

Nachfolgend wird im Zusammenhang mit den Figuren 5-8 eine leicht abgewandelte Ausführungsform des erfindungsgemäßen Lagersystems beschrieben, das alternativ zu dem in Figuren 1-4 beschriebenen System oder in Kombination damit eingesetzt werden kann. Der Grundaufbau des Lagersystems 2, des Shuttles 26 und des Lastaufnahmefahrzeugs 48 entspricht dabei der vorstehenden Beschreibung. Das Lagersystem 2 gemäß den Figuren 5-8 unterscheidet sich von dem vorstehend beschriebenen Ausführungsbeispiel im Wesentlichen dadurch, dass das Lagergut palettenlos, insbesondere in Form von Gebinden 62 unterschiedlicher Größe realisiert ist. In Figur 5 sind beispielsweise vier verschiedene Gebindegrößen dargestellt. So sind beispielsweise in Lagergängen 34-1 Gebinde 62 einer mittleren Größe angeordnet, in einem Lagerkanal 34-2 Gebinde 62 kleiner Größe, in einem Lagerkanal 34-3 wiederum Gebinde 62 der mittleren Größe und in einem Lagerkanal 34-4 Gebinde 62 mit den größten Abmessungen eingelagert. Jeder der Lagerkanäle 34-1 bis 34-4 verfügt in der dargestellten Ausführungsform über vier parallel zueinander angeordnete Kanalprofile 36. Auf den Kanalprofilen 36 ist das Lagergut in Form der verschiedenen Gebinde 62 jeweils derart abgelegt, dass es zumindest auf zwei Kanalprofilen 36 aufliegt Dies ist jedoch nicht notwendigerweise erforderlich, vielmehr können noch kleinere Gebinde 62 auch auf einem einzigen Kanalprofil gelagert sein.

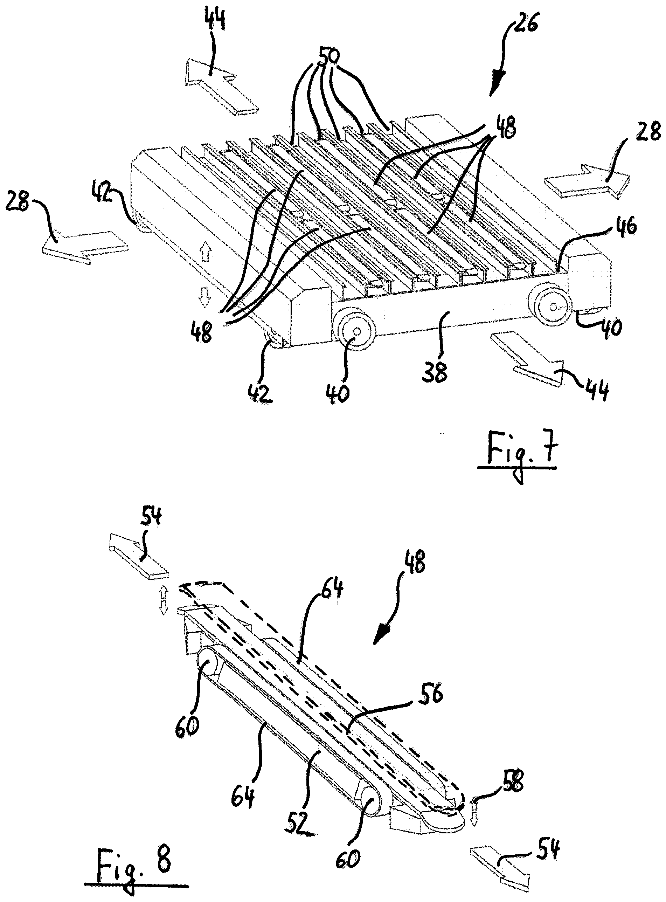

In Figur 7 ist das Shuttle-Fahrzeug 26 gemäß dieser Ausführungsform näher gezeigt. Bei diesem Shuttle-Fahrzeug 26 sind nicht nur analog zum Regalsystem 4 Kanalprofile 50 auf dem Aufnahmebereich 46 angeordnet, sondern neun Kanalprofile. Damit kann das Shuttle 26 beispielsweise zusätzliche Lastaufnahmefahrzeuge 48 mit sich führen, die bei entsprechender Ausrichtung mit den Kanalprofilen 36 des Lagersystems 2 in die jeweiligen Regalreihen 4 abgegeben werden können. Auf dem Shuttle 26 gemäß Figur 7 sind acht Lastaufnahmefahrzeuge 48 in vier Kanalprofilen 50 angeordnet. Dabei sind jeweils zwei Lastaufnahmefahrzeuge 48 in Längsrichtung benachbart zueinander in einem Kanalprofil 50 vorgesehen. Zwischen in Querrichtung benachbarten Lastaufnahmefahrzeugen 48 ist in der dargestellten Variante jeweils ein Kanalprofil frei. Selbstverständlich kann das in Figur 7 gezeigte Shuttle 26 auch zur Verwendung in Lagerabschnitten des Lagersystems 2 verwendet werden, in denen in den Lagerkanälen ebenfalls mehr als vier, insbesondere auch neun Kanalprofile 36 vorgesehen sind. Alternativ dazu kann das Shuttle 26 auch für Kanalsysteme verwendet werden, in denen weniger als vier Kanalprofile 36 pro Lagerkanal 34 vorgesehen sind.

In Figur 8 ist eine modifizierte Ausführungsform eines Lastaufnahmefahrzeugs 48 dargestellt. Ein derartiges Lastaufnahmefahrzeug 48 kann selbstverständlich auch im Zusammenhang mit der in den Figuren 1-3 beschriebenen Ausführungsform verwendet werden. Gleichfalls kann das im Zusammenhang mit Figur 4 beschrieben Lastaufnahmefahrzeug 48 auch für die Ausführungsform des Lagersystems und Shuttles gemäß der Figuren 5-7 verwendet werden. Das Lastaufnahmefahrzeug 48 gemäß Figur 8 verfügt wiederum über eine Rahmen 52 und mindestens einen Lastaufnahmeabschnitt 56. Bei dieser Ausführungsform ist zum Antrieb des Lastaufnahmefahrzeugs 48 jedoch anstelle von Rädern 60, die direkt zum Antrieb verwendet werden, über Antriebsrädern 60 ein Riemen 64 vorgesehen, so dass jeweils ein auf der jeweiligen Seite des Fahrzeugs vorgesehenes Räderpaar 60 zusammen mit einem Riemen 64 eine Antriebseinheit bildet. Der Lastaufnahmeabschnitt 56 gemäß dieser Ausführungsform lässt sich, wie anhand der Pfeile 58 schematisch dargestellt, in seiner Höhe zur Aufnahme von Lasten anheben. Analog zur Ausführungsform gemäß Figur 4, kann auch das Lastaufnahmefahrzeug 48 gemäß Figur 8 mehr als einen Lastaufnahmeabschnitt aufweisen.

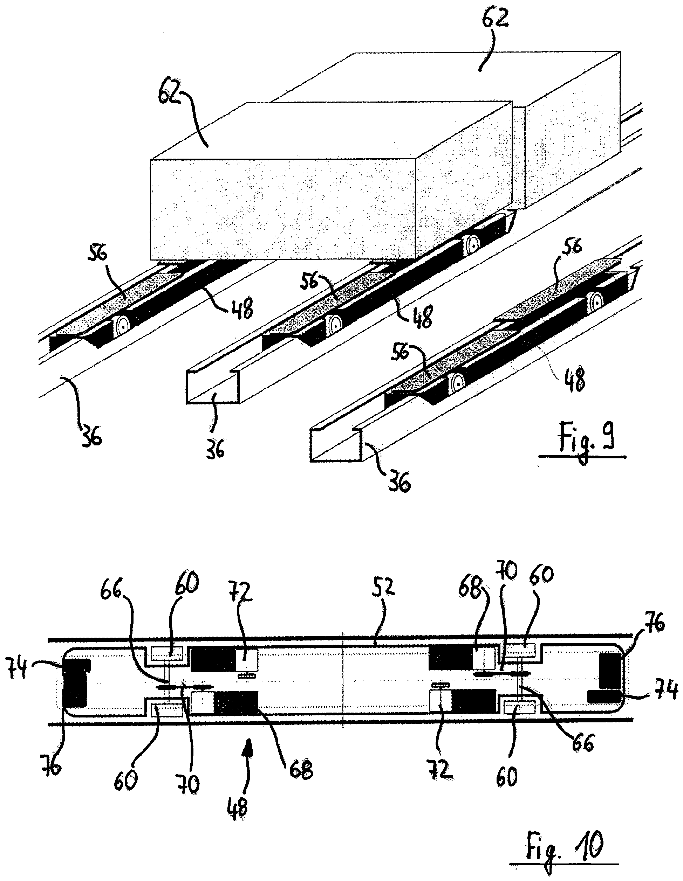

Dies ist schematisch im Zusammenhang mit Figur 9 dargestellt. Gemäß Figur 9 befinden sich zwei Lastaufnahmefahrzeuge 48 im Bereich eines Ladeguts 62. Dieses ist bereits anhand zweier angehobener Lastaufnahmeabschnitte 56 von zwei Lastaufnahmefahrzeugen 48 vom jeweiligen Kanalprofil 36 angehoben und kann nun mit den Lastaufnahmefahrzeugen 48 entlang eines Lagerkanals 34 bis zu einem Längsgang 6 bewegt werden, und dort auf ein Shuttle 26 verladen werden.

In Figur 10 ist ein Lastaufnahmefahrzeug 48 schematisch in Draufsicht dargestellt, wobei einige Komponenten näher gezeigt sind. Am Rahmen 52 ist ein Fahrgestell mit den Rädern 60 und einer die beiden Räder verbindenden Achse 66 sowie einer Antriebseinrichtung mit einem Motor 68 und einem Riementrieb 70 vorgesehen. Ferner ist in Figur 10 ein Antrieb 72 für die Hubeinrichtung des jeweiligen Lastaufnahmeabschnitts 56 schematisch dargestellt. Im Bereich des vorderen und hinteren Endes des Lastaufnahmefahrzeugs 48 sind Sensoren 74 zur Positionierung und Fahrwegkontrolle vorgesehen. Darüber hinaus sind in Figur 10 Mittel 76 schematisch dargestellt, die zum Koppeln des Lastaufnahmefahrzeugs 48 mit anderen Lastaufnahmefahrzeugen geeignet sind.

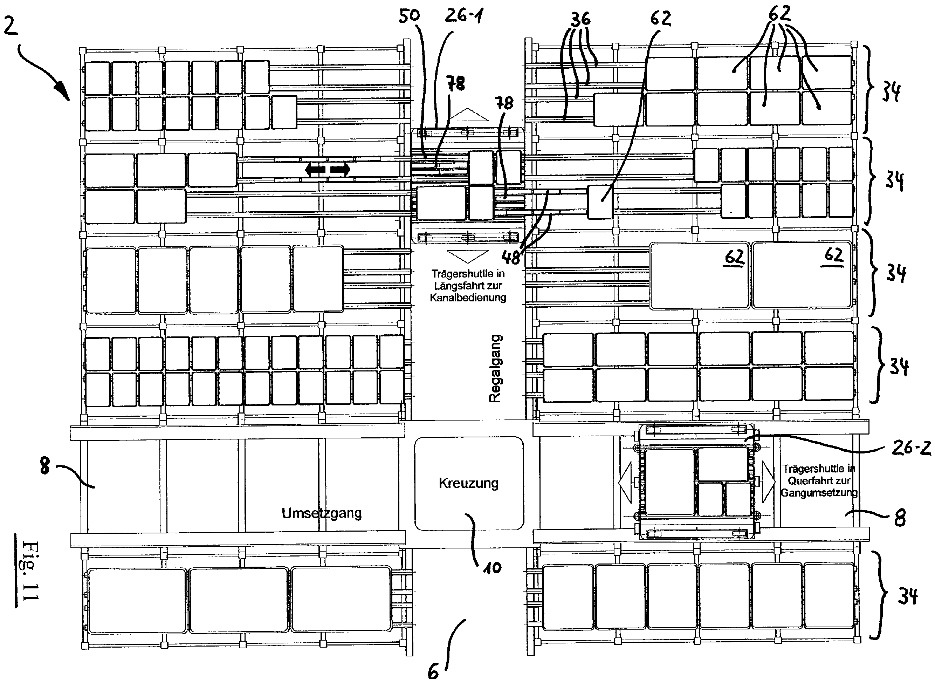

In Figur 11 ist ein erfindungsgemäßes Lagersystem 2, ähnlich dem in Figur 5 dargestellten Lagersystem 2, in Draufsicht dargestellt. Darin sind Längsgänge 6 und Quergänge 8 sowie ein Kreuzungsbereich 10 erkennbar. Auch bei diesem Lagersystem 2 kommen mehrfach tiefe Regalreihen 4 zum Einsatz, wobei pro Lagerkanal 34 vier Kanalprofile 36 vorgesehen sind. Auf den Shuttle-Fahrzeugen 26 sind verschiedene Gebinde 62 von Lagergütern dargestellt, wobei das Shuttle 26-1 gerade mit einem weiteren Gebinde 62 mittels Lastaufnahmefahrzeugen 48 beladen wird. Das Shuttle 26-2 ist bereits voll beladen und transportiert das Lagergut beispielsweise zu einem Kommissionierplatz. Alternativ dazu kann mit dem erfindungsgemäßen System durch die Verwendung verschiedener Lastaufnahmefahrzeuge 48 in Kombination mit dem Shuttle 26 ein Kommissionieren bereits beim Entnehmen des Lagerguts aus dem Regalsystem erfolgen. Eine Zusammenstellung verschiedener Lagergüter kann dann, wie beispielsweise anhand des Shuttles 26-2 gezeigt, direkt zur Weiterverarbeitung bzw. zum Abtransport verbracht werden.

Insbesondere zum Kommissionieren, aber auch zur Aufnahme von Ladegut kann es vorteilhaft sein, das Shuttle 26 mit einer Einrichtung zum Fördern von Ladehilfsmitteln, z.B. Paletten 30, 32 und/oder Ladegut 62 auszustatten. Eine derartige Einrichtung kann beispielsweise in Form von Rad-, Rollen-, Riemen-, und/oder Kettenförderern ausgebildet sein. In der Ausführungsform gemäß Figur 11 verfügen die Shuttle 26-1 und 26-2 über jeweils zwischen den Kanalprofilen 50 angeordnete Fördereinrichtungen 78. Mit diesen Fördereinrichtungen 78 kann das Ladegut direkt vom Lastaufnahmefahrzeug 48 übernommen werden, ohne dass dieses vollständig auf das Shuttle 26 verfahren werden muss. Dadurch kann das Lastaufnahmefahrzeug 48, sobald das Ladegut 62 an das Shuttle 26 übergeben ist, wieder zur Aufnahme weiteren Ladeguts im demselben oder einem gegenüberliegenden Lagerkanal 34 eingesetzt werden. Das auf dem Shuttle angekommene Ladegut 62 kann dann mithilfe der Fördereinrichtung 78 wie gewünscht positioniert werden.

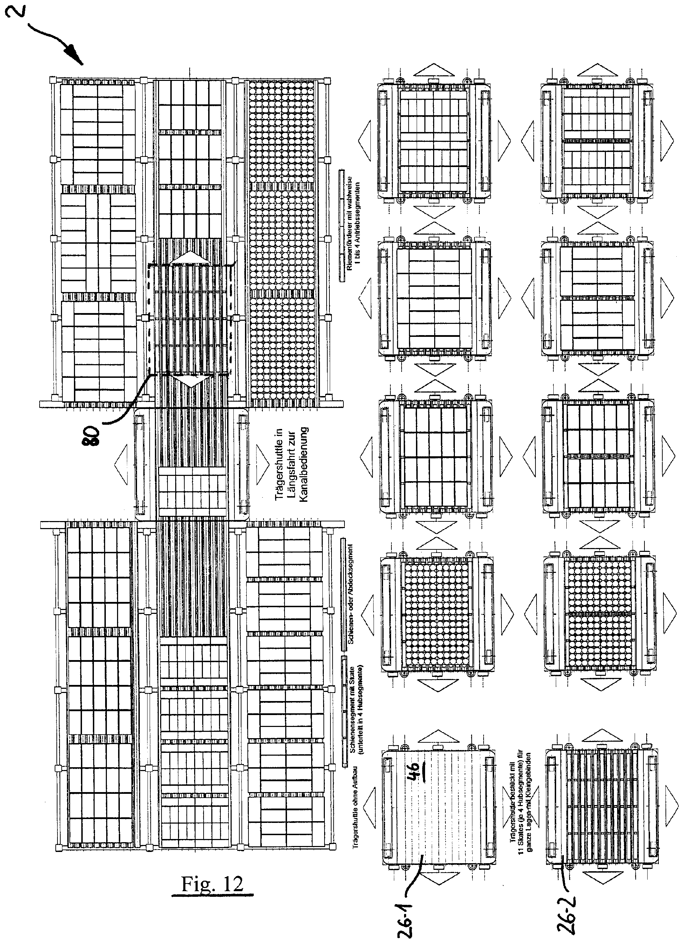

In Figur 12 ist eine weitere Ausführungsform eines erfindungsgemäßen Lagersystems 2 mit Kommissionierfähigkeit dargestellt. Allerdings weist das Shuttle 26 bei dieser Ausführungsform eine höhere Anzahl von Kanalprofilen 50 auf, als dies bei der Ausführungsform gemäß der Figur 11 der Fall ist. Entsprechend der Darstellung in der oberen Hälfte von Figur 12 verfügen sowohl das Shuttle 26 als auch die Lagerkanäle jeweils über 11 Kanalprofile 50 bzw. 36, in die entsprechende Anzahlen von Lastaufnahmefahrzeugen nebeneinander eingeführt werden können. Im Bereich des markierten Feldes 80 in Figur 12 sind 11 x 4 Lastaufnahmefahrzeuge 48 im Verbund zum Einsatz vorgesehen. Es sind also 11 Lastaufnahmefahrzeuge nebeneinander in den jeweiligen Kanalprofilen 36 und jeweils vier Lastaufnahmefahrzeuge 48 hintereinander in jedem Kanalprofil 36 angeordnet. Damit lassen sich auch ganze Palettenlagen und/oder ganze Lagentürme (mehrere ganze Lagen) z.B. mit relativ kleinen Gebinden 62 und/oder Gebindetürme (Turm aus einem Teil mehrerer Lagen) problemlos aufgreifen und auf das Shuttle 26 verbringen. Anstelle von vier in Längsrichtung miteinander gekoppelten einzelnen Lastaufnahmefahrzeugen 48 können beispielsweise auch nur zwei oder nur ein Lastaufnahmefahrzeug(e) verwendet werden, wobei dann vorzugsweise pro Lastaufnahmefahrzeug jeweils zwei, drei, vier oder mehr individuell anhebbare Lastaufnahmeabschnitte 56 vorgesehen sind.

Auch die Verwendung von Fördereinrichtungen, wie dies im Zusammenhang mit Figur 11 beschrieben ist, ist im Zusammenhang mit dieser Ausführungsform möglich. In der unteren Hälfte von Figur 12 sind zehn verschiedene Beispiele von Ladezuständen des Shuttles gemäß dieser Ausführungsform dargestellt. Das Shuttle 26-1 verfügt über einen Lastaufnahmebereich 46, der mit verschiedenen Kanalprofilen 50 und darin vorgesehen Lastaufnahmefahrzeugen bestückbar ist. Das Shuttle 26-2 ist im Bereich des Aufnahmebereichs 46, wie bereits vorstehend beschrieben, mit elf parallel zueinander angeordneten Kanalprofilen 50 und darin vorgesehenen Lastaufnahmefahrzeugen bestückt. Mit dieser Bestückung lassen sich Gebinde in vielfältiger Art und Weise mit dem Shuttle 26 aufnehmen, wie anhand der übrigen acht Darstellungen gemäße Figur 12 erkennbar ist. In der oberen "Zeile" der dargestellten Shuttle 26 sind verschiedene Lagergüter auf Euro-Paletten 30 lagenweise angeordnet. In der unteren "Zeile" von Figur 12 sind die gleichen Anordnungen von Lagergütern auf Düsseldorfer Paletten 32 auf gezeigt. Für sämtliche der gezeigten Anordnungen und Palettenvarianten kann immer das gleiche Shuttle 26 verwendet werden.

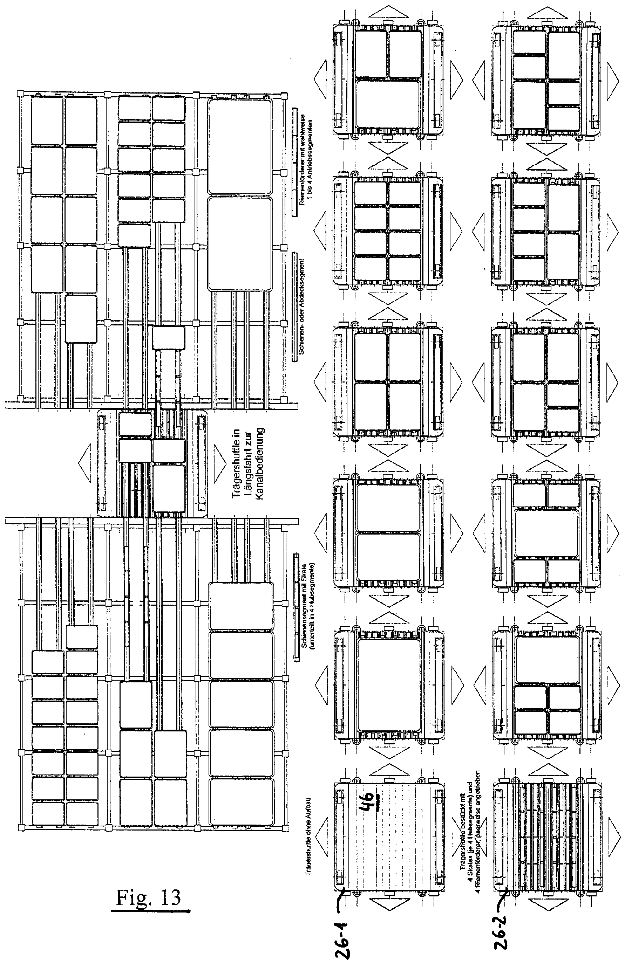

Figur 13 ist wiederum eine Darstellung ähnlich Figur 11, wobei in der unteren Hälfte das Shuttle 26 wiederum in verschiedenen Konfigurationen dargestellt ist. Das Shuttle 26-1 ist mit einem Aufnahmebereich 46 dargestellt, wobei beim Shuttle 26-2 auf dem Aufnahmebereich vier Kanalprofile 50 vorgesehen sind und jeweils zwei dazwischen angeordnete Fördereinrichtungen 78, wie vorstehend bereits im Zusammenhang mit Figur 11 beschrieben. Die übrigen zehn Darstellungen des Shuttles zeigen verschiedenen Lademöglichkeiten verschieden großer Gebinde auf einem derartigen Shuttle 26.

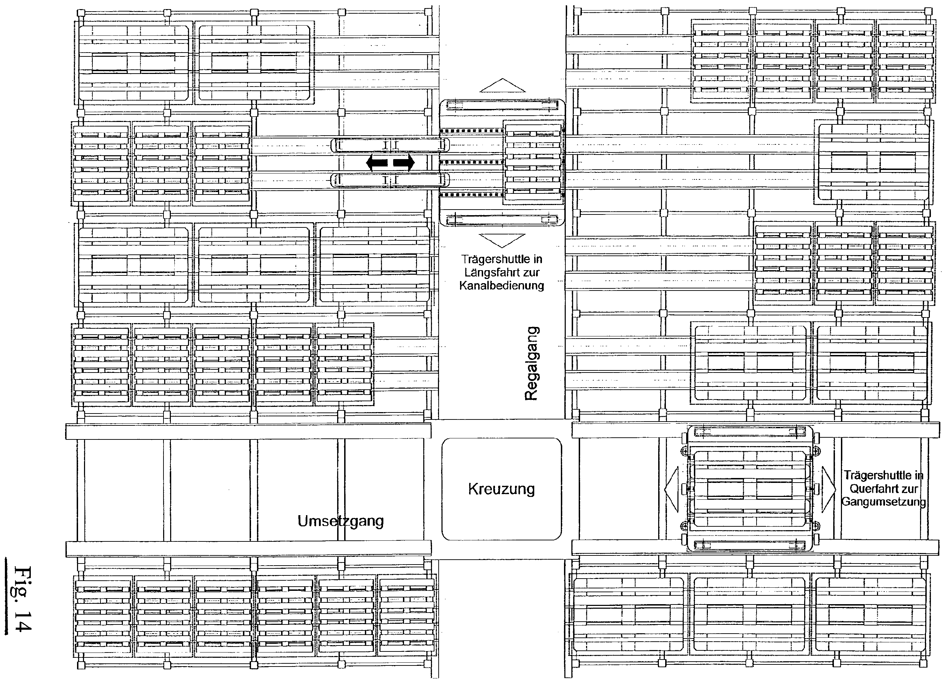

Die Darstellung gemäß Figur 14 zeigt das Regalsystem 2 gemäß der Erfindung in Verwendung mit Paletten verschiedener Größen. Wie bereits vorstehend im Zusammenhang mit den Figuren 1-4 erläutert, können anstelle der Einlagerung verschiedener Paletten zusätzlich auch palettenlose Gebinde im Regalsystem untergebracht werden.

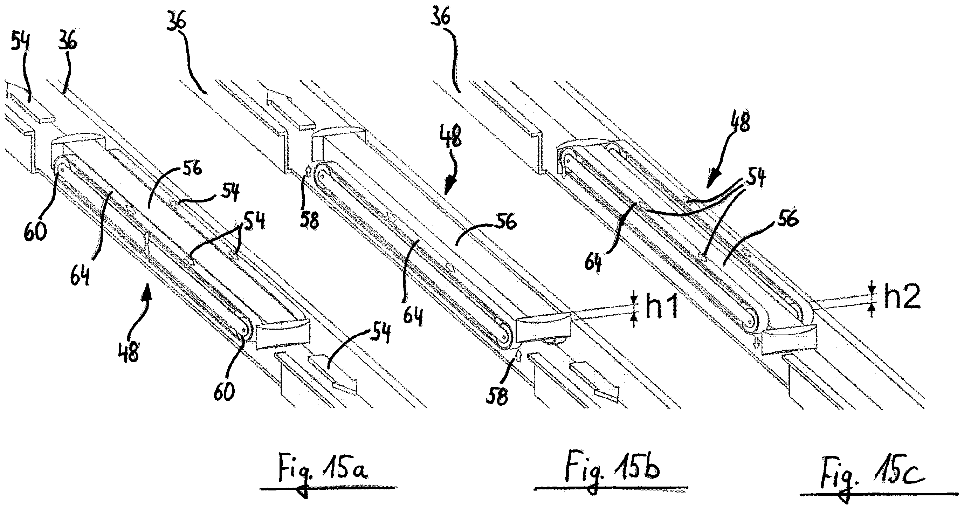

In den Figuren 15a bis 15c ist eine weitere Ausführungsform eines Lastaufnahmefahrzeugs 48 dargestellt. Dieses Lastaufnahmefahrzeug 48 ist insbesondere in Verbindung für Behälter und andere Einzelgebinde 62 vorteilhaft, kann aber auch im Zusammenhang mit Paletten 30, 32 problemlos verwendet werden. Analog zu den bisher beschriebenen Ausführungsformen des Lastaufnahmefahrzeugs 48 verfügt es über eine Antriebseinrichtung, die in diesem Beispiel in Form eines Riemenantrieb realisiert ist, ähnlich der Beschreibung im Zusammenhang mit Figur 8. Der Riemen 64 wird über Räder 60 zur Fortbewegung des Lastaufnahmefahrzeugs 48 verwendet, wie anhand der Pfeile 54 dargestellt. Damit ist ein Längsantrieb für das Lastaufnahmefahrzeug 48 bereitgestellt. In Figur 15a ist ein möglicher Verfahrzustand des Lastaufnahmefahrzeugs 48 dargestellt, bei dem der Lastaufnahmeabschnitt 56 in einer vom Untergrund etwas angehobenen Position, z.B. einer Mittelposition, angeordnet ist.

In Figur 15b ist der Lastaufnahmeabschnitt 56 durch die Hubeinrichtung entlang der Pfeile 58 angehoben, um beispielsweise Lagergut aus dem Regalsystem, das auf dem Kanalprofil 36 liegt, anzuheben. In dieser Position kann das Lastaufnahmefahrzeug 48 das Lagergut durch Antrieb des Riemens 64 längs des Kanalprofils durch den Lagerkanal 34 bewegen.

In Figur 15c ist eine Situation dargestellt, in der die Hubeinrichtung den Lastaufnahmeabschnitt 56 derart absenkt, bis beispielsweise der Rahmen 52 am Boden des Kanalprofils 36 aufsitzt und die Riemen 64 vom Boden des Kanalprofils 36 abgehoben werden. Wird die Hubeinrichtung um ein ausreichend großes Maß bewegt, so kommt die Oberseite des Riemens 64, die dann über den Lastaufnahmeabschnitt 56 hinausragt, mit dem Lagergut (z.B. Behälter) in Kontakt und hebt diesen an. Wird nun in diesem Zustand der Antriebsmechanismus aktiviert und die Riemen 64 entlang der Längsrichtung der Pfeile 54 bewegt, wird das Lastaufnahmefahrzeug 48 zur Fördereinrichtung.

Damit lassen sich gelagerte Gegenstände beispielsweise auf dem Shuttle 26 ohne Bewegen des Lastaufnahmefahrzeugs 48 verschieben, wie dies im Zusammenhang mit anderen Ausführungsformen der Erfindung durch eine separate Fördereinrichtung 78 erläutert ist. Dementsprechend ist das Lastaufnahmefahrzeug 48 gemäß der in Figur 15a-c dargestellten Ausführungsform von doppeltem Nutzen, da es sowohl zum Transport von Lagergut über relativ große Strecken aus dem Regalsystem durch die Kanalprofile verwendet werden kann und gleichzeitig als Fördereinrichtung zur Positionierung von Lagergut verwendbar ist, ohne dass sich das Lastaufnahmefahrzeug 48 dabei selbst bewegt.

Die vorliegende Erfindung enthält somit eine Vielzahl von Neuerungen, die eine weitgehend gemischte Lagerhaltung unabhängig davon, ob die gelagerten Gegenstände beispielsweise auf Paletten, in Behältern, auf Tableaus oder Ähnlichem gelagert werden, auf einfach Art und Weise ermöglicht, wobei voll automatisch auf die eingelagerten Gegenstände zugegriffen werden kann.

## Patentansprüche

1. Lager- und/oder Kommissioniersystem zum Lagern und/oder Kommissionieren von Gütern, mit: einem Regalsystem, das Regalreihen (4) aufweist, die durch Längsgassen (6) voneinander beabstandet und mittels mindestens einer Quergasse (8) miteinander verbunden sind, wobei orthogonal durch die Regalreihen (4) Lagerkanäle (34) vorgesehen sind, und wobei die Lagerkanäle (34) durch Kanalprofile (36) gebildet sind und sich von einer Längsgasse (6) zu einer unmittelbar benachbarten Längsgasse (6) erstrecken;
mindestens zwei Lastaufnahmefahrzeuge (48), wobei die Kanalprofile (36) als Fahrspur für die Lastaufnahmefahrzeuge (48) und gleichzeitig zum Halten von Lagergut ausgebildet sind, wobei die Kanalprofile (36) derart voneinander beabstandet sind, dass sie in die nach unten offenen Gabelfreiräume einer Palette passen, und wobei die Lastaufnahmefahrzeuge (48) aufweisen:
einen länglich ausgebildeten Rahmen (52) mit einem daran angeordneten Fahrgestell und einer Antriebseinrichtung zum Verfahren des Lastaufnahmefahrzeugs (48) in Längsrichtung;
mindestens einen auf dem Rahmen (52) angeordneten Lastaufnahmeabschnitt (56) zur Aufnahme eines Ladehilfsmittels und/oder einer Ladung;
mindestens eine Hubeinrichtung zum Anheben und Absenken des Lastaufnahmeabschnitts; und
eine Kopplungseinrichtung zum Koppeln mehrerer Lastaufnahmefahrzeuge (48) miteinander, wobei die Kopplung kommunikativ, nicht mechanisch erfolgt, wobei ein Lastaufnahmefahrzeug (48) als Master fungiert und das/die andere(n) Lastaufnahmefahrzeug(e) (48) als Slave fungiert/fungieren, und
wobei die Lastaufnahmefahrzeuge (48) länglich ausgebildet und mindestens doppelt so lang wie breit sind, und wobei bei eingefahrener Hubeinrichtung die Höhe des Lastaufnahmefahrzeugs maximal 150 mm beträgt; und mindestens einem Shuttle (26), das ausgebildet ist, sowohl in den Längs- als auch in den Quergassen (6, 8) zu verfahren, wobei die mindestens zwei Lastaufnahmefahrzeuge (48) gleichzeitig auf dem Shuttle aufnehmbar sind.

2. Lager- und/oder Kommissioniersystem nach Anspruch 1, wobei mindestens zwei auf dem Rahmen (52) angeordnete Lastaufnahmeabschnitte (56) vorgesehen sind, die unabhängig voneinander mit jeweiligen Hubeinrichtungen anhebbar und absenkbar sind.

3. Lager- und/oder Kommissioniersystem nach Anspruch 1 oder 2, wobei die Kopplungseinrichtung eingerichtet ist:
(i) mindestens zwei längs zueinander ausgerichtete Lastaufnahmefahrzeuge (48) miteinander zu koppeln, oder
(ii) mindestens zwei in Querrichtung relative zueinander ausgerichtete Lastaufnahmefahrzeuge (48) miteinander zu koppeln, oder
(iii) mindestens zwei in Längsrichtung relative zueinander ausgerichtete Lastaufnahmefahrzeuge (48) und mindestens zwei in Querrichtung relative zueinander ausgerichtete Lastaufnahmefahrzeuge (48) miteinander zu koppeln.

4. Lager- und/oder Kommissioniersystem nach einem der Ansprüche 1 bis 3, wobei die Antriebseinrichtung aufweist:
(i) Räder, Rollen, Riemen und/oder Ketten, mit denen das Lastaufnahmefahrzeug verfahrbar ist; oder
(ii) mindestens einen Motor, optional mit Getriebe; oder
(iii) eine Steuerung zum autonomen Verfahren des Lastaufnahmefahrzeugs; oder
(iv) einen Energiespeicher, vorzugsweise in Form eines Akkus, Kondensators, insbesondere Superkondensators; oder
(v) jegliche Kombination aus (i) bis (iv).

5. Lager- und/oder Kommissioniersystem nach einem der Ansprüche 1 bis 4, wobei das Lastaufnahmefahrzeug (48) eine Einrichtung zum Fördern des Ladehilfsmittels und/oder der Ladung in Längsrichtung, insbesondere einen oder mehrere Rad-, Rollen-, Riemen- und/oder Kettenförderer, aufweist.

6. Lager- und/oder Kommissioniersystem nach Anspruch 5, wobei die Einrichtung zum Fördern durch die Antriebseinrichtung, vorzugsweise die Räder, Rollen, Riemen und/oder Ketten, bereitgestellt ist, indem sie mit dem Ladehilfsmittel und/oder der Ladung direkt in Kontakt bringbar ist.

7. Lager- und/oder Kommissioniersystem nach einem der Ansprüche 1 bis 6, wobei bei eingefahrener Hubeinrichtung die Höhe des Lastaufnahmefahrzeugs maximal 100 mm beträgt.

8. Lager- und/oder Kommissioniersystem nach einem der Ansprüche 1-7, wobei jeder Lagerkanal (34) eine Stellplatzbreite, vorzugsweise mit einer Breite zwischen 1 und 1,5 m, definiert und pro Stellplatzbreite mindestens zwei und höchstens zehn parallel verlaufende Kanalprofile (36) für jeweils mindestens ein Lastaufnahmefahrzeug (48) vorgesehen sind.

9. Lager- und/oder Kommissioniersystem nach einem der Ansprüche 1-8, wobei das Shuttle (26) einen Rahmen (38), ein Fahrgestell und einen Aufnahmebereich (46) aufweist, wobei der Aufnahmebereich (46) mindestens zwei Lastaufnahmefahrzeuge (48) gleichzeitig trägt.

10. Lager- und/oder Kommissioniersystem nach Anspruch 9, wobei der Aufnahmebereich (46) mehrere parallel zueinander ausgerichtete Profilschienen (50) aufweist und in jeder der Profilschienen (50) mindestens ein Lastaufnahmefahrzeug (48) aufnehmbar ist.

11. Lager- und/oder Kommissioniersystem nach Anspruch 9 oder 10, wobei zumindest zwei der Profilschienen (50) derart voneinander beabstandet sind, dass sie in die nach unten offenen Gabelfreiräume einer Palette passen.

12. Lager- und/oder Kommissioniersystem nach einem der Ansprüche 9 bis 11, wobei im Aufnahmebereich (50) mindestens eine Einrichtung zum Fördern von Ladehilfsmitteln und/oder Ladung, insbesondere in Form von Rad-, Rollen-, Riemen- und/oder Kettenförderern, vorgesehen ist.

13. Lager- und/oder Kommissioniersystem nach einem der Ansprüche 1 bis 12, ferner mit einer Basisstation zur Aufnahme der mindestens zwei Lastaufnahmefahrzeuge, wobei optional die Basisstation zur Anbringung an einem Regalfahrzeug ausgebildet ist.

## Claims

1. A storage and/or commissioning system for storing and/or commissioning goods, comprising:
a shelf system comprising shelf rows (4) which are spaced apart from each other by longitudinal aisles (6) and connected to each other by at least one transverse aisle (8), wherein storage channels (34) are provided orthogonally across the shelf rows (4), and wherein the storage channels (34) are formed by channel profiles (36) and extend from a longitudinal aisle (6) to a directly adjacent longitudinal aisle (6);
at least two load pick-up vehicles (48), wherein the channel profiles (36) are configured as lanes for the load pick-up vehicles (48) and, at the same time, for supporting stored goods, wherein the channel profiles (36) are spaced apart from each other such that they fit into the downwardly open forklift slots of a palette, and wherein the load pick-up vehicles (48) comprise:
a longitudinally configured frame (52) with a chassis arranged thereto and a drive mechanism for moving the load pick-up vehicle (48) in the longitudinal direction;
at least one load receiving section (56) arranged at the frame (52) for receiving a load equipment and/or a load;
at least one lifting device for lifting and lowering the load receiving section; and
a coupling device for coupling to each other a plurality of load pick-up vehicles (48), wherein the coupling takes place communicatively, not mechanically, wherein a load pick-up vehicle (48) acts as master and other load pick-up vehicle(s) (48) act(s) as slave, and
wherein the load pick-up vehicles (48) are configured longitudinally and are at least twice as long as wide, and wherein the height of the load pick-up vehicle is at most 150 mm when the lifting device is retracted; and
at least one shuttle (26) that is configured to move both in the longitudinal and the transverse aisles (6, 8), wherein the at least two load pick-up vehicles (48) are receivable on the shuttle at the same time.

2. The storage and/or commissioning system according to claim 1, wherein at least two load receiving sections (56) arranged at the frame (52) are provided, said load receiving sections (56) being liftable and lowerable independently of each other with respective lifting devices.

3. The storage and/or commissioning system according to claim 1 or 2, wherein the coupling device is configured:
(i) to couple to each other at least two load pick-up vehicles (48) aligned longitudinally to each other, or
(ii) to couple to each other at least two load pick-up vehicles (48) aligned relatively to each other in the transverse direction, or
(iii) to couple to each other at least two load pick-up vehicles (48) aligned relatively to each other in the longitudinal direction and at least two load pick-up vehicles (48) aligned relatively to each other in the transverse direction.

4. The storage and/or commissioning system according to any one of claims 1 to 3, wherein the drive mechanism comprises:
(iv) wheels, rollers, belts and/or chains by means of which the load pick-up vehicle is movable; or
(v) at least one motor, optionally with a transmission; or
(vi) a control for autonomous movement of the load pick-up vehicle; or
(vii) a energy storage, preferably in the form of a battery, capacitor, particularly a supercapacitor; or
(viii) any combination of (i) to (iv).

5. The storage and/or commissioning system according to any one of claims 1 to 4, wherein the load pick-up vehicle (48) comprises a device for conveying the load equipment and/or the load in the longitudinal direction, particularly one or more wheel conveyors, roller conveyors, belt conveyors and/or chain conveyors.

6. The storage and/or commissioning system according to claim 5, wherein the device for conveying is provided by the drive mechanism, preferably the wheels, rollers, belts and/or chains as it can be brought into contact with the load equipment and/or the load.

7. The storage and/or commissioning system according to any one of claims 1 to 6, wherein the height of the load pick-up vehicle is at most 100 mm when the lifting device is retracted.

8. The storage and/or commissioning system according to any one of claims 1 to 7, wherein every storage channel (34) defines a storing position width, preferably with a width of between 1 and 1,5 m, and at least two and at most ten parallel channel profiles (36) are provided per storing position width for at least one load pick-up device (48) at a time, respectively.

9. The storage and/or commissioning system according to any one of claims 1 to 8, wherein the shuttle (26) comprises a frame (38), a chassis and a receiving area (46), wherein the receiving area (46) supports at least two load pick-up vehicles simultaneously.

10. The storage and/or commissioning system according to claim 9, wherein the receiving area (46) comprises a plurality of profile rails (50) aligned parallel to each other, and at least one load pick-up vehicle (48) is receivable per profile rail (50).

11. The storage and/or commissioning system according to claim 9 or 10, wherein at least two of the profile rails (50) are spaced apart from each other such that they fit into the downwardly open forklift slots of a palette.

12. The storage and/or commissioning system according to any one of claims 9 to 11, wherein at least one device for conveying load equipment and/or a load is provided in the receiving area (46), particularly in the form of wheel conveyors, roller conveyors, belt conveyors and/or chain conveyors.

13. The storage and/or commissioning system according to any one of claims 1 to 12, further comprising a base station for receiving the at least two load pick-up vehicles, wherein optionally the base station is configured for attachment at a shelf vehicle.

## Revendications

1. Système de stockage et/ou de triage, pour le stockage et/ou le triage de produits, comprenant :
un système de rayonnages avec des rangées de rayonnages (4), espacées entre elles par des allées longitudinales (6) et reliées les unes aux autres par au moins une allée transversale (8), des canaux de stockage (34) étant prévus orthogonalement aux rangées de rayonnages (4), et les canaux de stockage (34) étant formés par des profilés de canal (36) et s'étendent d'une allée longitudinale (6) à une allée longitudinale (6) immédiatement contiguë ;
au moins deux véhicules de réception de charge (48), les profilés de canal (36) étant prévus comme voie de circulation pour les véhicules de réception de charge (48) et prévus simultanément pour le maintien de marchandises stockées, les profilés de canal (36) étant espacés entre eux de manière à être ajustables dans les passages de fourche ouverts vers le bas d'une palette, et les véhicules de réception de charge (48) présentant :
un châssis (52) de forme oblongue avec un train de roulement disposé sur celui-ci et un dispositif d'entraînement pour le déplacement du véhicule de réception de charge (48) dans la direction longitudinale ;
au moins une partie de réception de charge (56) ménagée sur le châssis (52), destinée à recevoir un support de manutention et/ou une charge ;
au moins un dispositif de levage pour la soulèvement et l'abaissement de la partie de réception de charge ; et
un dispositif d'accouplement permettant d'accoupler plusieurs véhicules de réception de charge (48) les uns aux autres, l'accouplement étant effectué de manière communicative, non mécanique, un véhicule de réception de charge (48) servant de maître et le ou les autres véhicules de réception de charge (48) servant d'esclave, et les véhicules de réception de charge (48) étant prévus avec une forme oblongue et au moins deux fois plus longs que larges, et la hauteur maximale du véhicule de réception de charge étant de 150 mm quand le dispositif de levage est rentré ; et
au moins une navette (26), prévue pour se déplacer aussi bien dans les allées longitudinales que dans les allées transversales (6, 8), les au moins deux véhicules de réception de charge (48) pouvant être reçus ensemble sur la navette.

2. Système de stockage et/ou de triage selon la revendication 1, où sont prévues au moins deux zones de réception de charge (56) ménagées sur le châssis (52), lesquelles peuvent être soulevées et abaissées indépendamment l'une de l'autre par leur dispositif de levage respectif.

3. Système de stockage et/ou de triage selon la revendication 1 ou la revendication 2, où le dispositif d'accouplement est prévu :
(i) pour accoupler l'un à l'autre au moins deux véhicules de réception de charge (48) alignés longitudinalement, ou
(ii) pour accoupler l'un à l'autre au moins deux véhicules de réception de charge (48) disposés transversalement l'un par rapport à l'autre, ou
(iii) pour accoupler l'un à l'autre au moins deux véhicules de réception de charge (48) alignés longitudinalement et au moins deux véhicules de réception de charge (48) disposés transversalement l'un par rapport à l'autre.

4. Système de stockage et/ou de triage selon l'une des revendications 1 à 3, où le dispositif d'entraînement comprend :
(i) des roulettes, des rouleaux, des courroies et/ou des chaînes permettant le déplacement du véhicule de réception de charge ; ou
(ii) au moins un moteur, avec un engrenage facultatif ; ou
(iii) une commande de déplacement autonome du véhicule de réception de charge ; ou
(iv) un accumulateur d'énergie, préférentiellement sous la forme d'une batterie, d'un condensateur, en particulier d'un super-condensateur ; ou
(v) d'une combinaison quelconque de (i) à (iv).

5. Système de stockage et/ou de triage selon l'une des revendications 1 à 4, où le véhicule de réception de charge (48) comprend un dispositif de transport du support de manutention et/ou de la charge dans la direction longitudinale, en particulier un ou plusieurs convoyeurs à roulettes, à rouleaux, à courroie et/ou à chaîne.

6. Système de stockage et/ou de triage selon la revendication 5, où le dispositif de transport est réalisé par le dispositif d'entraînement, préférentiellement les roulettes, les rouleaux, les courroies et/ou les chaînes, en pouvant être amené en contact direct avec le support de manutention et/ou la charge.

7. Système de stockage et/ou de triage selon l'une des revendications 1 à 6, où la hauteur maximale du véhicule de réception de charge est de 100 mm quand le dispositif de levage est rentré.

8. Système de stockage et/ou de triage selon l'une des revendications 1 à 7, où chaque canal de stockage (34) définit une largeur d'emplacement, préférentiellement comprise entre 1 et 1,5 m, et en ce que par largeur d'emplacement au moins deux et au maximum dix profilés de canal (36) parallèles sont respectivement prévus pour au moins un véhicule de réception de charge (48).

9. Système de stockage et/ou de triage selon l'une des revendications 1 à 8, où la navette (26) présente un châssis (38), un train de roulement et une zone de réception (46), la zone de réception (46) supportant ensemble au moins deux véhicules de réception de charge (48).

10. Système de stockage et/ou de triage selon la revendication 9, où la zone de réception (46) présente plusieurs rails profilés (50) parallèles entre eux et en ce qu'au moins un véhicule de réception de charge (48) peut être reçu dans chacune des rails profilés (50).

11. Système de stockage et/ou de triage selon la revendication 9 ou la revendication 10, où au moins deux des rails profilés (50) sont espacés entre eux de manière à être ajustables dans les passages de fourche ouverts vers le bas d'une palette.

12. Système de stockage et/ou de triage selon l'une des revendications 9 à 11, où dans la zone de réception (50) est prévu au moins un dispositif de transport de supports de manutention et/ou de charge, en particulier sous la forme de convoyeurs à roulettes, à rouleaux, à courroie et/ou à chaîne.

13. Système de stockage et/ou de triage selon l'une des revendications 1 à 12, comprenant en outre une station de base pour l'accueil des au moins deux véhicules de réception de charge, ladite station de base étant prévue pour être facultativement mise en place sur un gerbeur.
